# EUROPEAN PATENT SPECIFICATION

(11) **EP 2 096 135 B1**
(45) Date of publication and mention of the grant of the patent: **04.07.2012**
(21) Application number: 08003548.8
(22) Date of filing: 27.02.2008
(51) Int. Cl.: C08J 9/08, C08K 3/22, C08K 3/26, C08K 5/092

(54) **Foamable polymer preparations and compositions comprising a foamed polymer and having high and rapid water absorption**
Verschäumbare Polymerzubereitungen und Zusammensetzungen umfassend ein geschäumtes Polymer mit hoher und schneller Wasserabsorption
Préparations de polymère moussant et compositions comportant un polymère expansé avec une absorption de l'eau rapide et élevée

(43) Date of publication of application: 02.09.2009
(73) Proprietor: AIRSEC, 94600 Choisy-le-Roi (FR)
(72) Inventor: Kröhnke, Christoph, 81377 München (DE); Logel, Valere, 92300 Levallois-Perret (FR)
(74) Representative: HOFFMANN EITLE

(56) References cited:
- WO-A-93/08014
- DATABASE WPI Week 199443 Thomson Scientific, London, GB; AN 1994-347289 XP002486784 & JP 06 271775 A (KIKUCHI T) 27 September 1994 (1994-09-27)

## Description

### Field of the Invention

The present invention relates to the field of foamable polymer preparations, to compositions comprising a foamed polymer and a desiccant and having high and rapid water absorption, moulded articles produced from said compositions and to processes for the production of said foamable polymer preparations, said compositions and said moulded articles.

### Background of the Invention

Desiccants are used to control moisture in various environments so as to avoid damage to moisture-sensitive products such as scientific/electronic instruments, speciality chemicals or pharmaceuticals and leather goods. Desiccants are typically contained in discrete moisture-permeable packages and these packages are included within the packaging for the moisture-sensitive product e.g. in a jar of tablets, or in a shoe box, or within the housing of a scientific/electronic instrument. Polymer compositions comprising a desiccant have been used in packaging material for pharmaceutical products such as medicaments in order protect such products from water.

It is an important requirement for packaging materials such as container, tubes and the like to not occupy more volume than inevitably necessary in order to maintain the packaged products intact. Thus, it is desired to provide containers having dimensions as small as possible with respect to the product to be packaged. At the same time, it is required for some products such as pharmaceutical preparations that an atmosphere is provided and maintained within the container in order to prevent a deterioration of the packaged product by the action of moisture and, in sophisticated applications, by oxygen during storage of the product.

Purging the interior of the container with a gas having a reduced moisture content and, optionally, a reduced oxygen content does not represent a solution, if the packaged product is not used at once, but in portions. This is a common case with respect to pharmaceutical products in the form of tablets, pills, lozenges and the like which are consumed piece by piece. Hence, in such cases, the container is opened and re-closed various times over a period of several days, several weeks or even longer.

Each time the container is opened, ambient atmosphere possibly carrying a significant amount of moisture and oxygen inevitably enters the container. If the moisture is not removed from the atmosphere within the container, a deterioration of the packaged product can not be prevented. Therefore, in particular in applications such as pharmaceutical products, it is necessary to provide efficient moisture removing means such as desiccants within the container. At the same time, it has to be avoided that the desiccant contaminates the product. Therefore, it has been proposed to incorporate the desiccant into a solid non-granular polymer matrix which also allows the desiccant material to be processed by using standard polymer processing techniques such as described in EP 1 739 028 A1.

For these reasons, desiccant-containing polymer compositions have attracted attention which is reflected by the documents described in the following.

WO 2006/079713 A1 discloses a compact polymer composition comprising a polymer, a desiccant and a water saturation indicator.

EP 0 599 690 A1 and WO 2005/061101 A1 describe compact polymer compositions comprising a polymer and a desiccant which can be used in the manufacture of packaging containers.

GB 2 437 644 A and WO 2007/122412 A1 are directed to a process for the manufacture of a polymer composition comprising an adsorbent solid such as a desiccant or odour-controlling material entrained in a polymer matrix produced by mixing said desiccant with monomeric compounds and subsequently polymerizing the resulting mixture. As suitable desiccants molecular sieves such as aluminosilicates (zeolites), silica gels and clays are mentioned. As foaming agents, azodicarbonamide and the combination of sodium hydride with ε-caprolactam as the building block of the polymer to be foamed are mentioned.

EP 1 148 085 A2 describes rubber compositions for shoe linings comprising a rubber material and a zeolite which allow rubber to be water absorbent. The rubber composition can be foamed, however, no specific foaming agent is mentioned.

US 4,911,899 is essentially directed to zeolite particles having bacteriostatic properties due to their content of metal ions which can be incorporated into various organic polymers. Various additives can be incorporated into such composition, for instance silica gel for water absorption. Whilst it is mentioned that the organic polymers can be foamed, no specific foaming agent is disclosed.

EP 0 253 663 A2 describes compositions comprising an organic polymer and an amorphous aluminosilicate ("AMAS") wherein various organic polymers are described as being suitable. Various additives such as foaming agents can be incorporated into said composition. However, no specific foaming agent is disclosed.

WO 2007/149418 A mentions polymeric foams containing activated carbon as an agent capable of adsorbing water. For the production of foamed polymers, chemical foaming agents are described as compounds releasing a gas such as nitrogen, carbon dioxide or carbon monoxide. However, no specific foaming agent is mentioned.

EP 0 400 460 B relates to moisture-absorbent polymer containing a thermoplastic polymer, a desiccant and a foaming agent. As the foaming agent, organic agents such as azoisobutyronitrile, azodicarbonamide and 4,4'-oxybenzene sulfonylhydrazide are mentioned. It is known that these foaming agents yield organic decomposition products. For instance, it is known that the aforementioned organic foaming agents besides the gaseous products to which the foaming effect is related also yield the following non-gaseous products.

Azodicarbonamide: cyanuric acid, isocyanic acid 4,4'-Oxybenzene sulfonylhydrazide: disulfides, polymeric thiosulfate.

US 6,140,380 discloses a blowing agent comprising at least one metal silicate, boric acid or a salt thereof, a peroxy compound, a reaction initiator such as an alkali metal hydrogen carbonate, water and a desiccant such as calcium oxide and aluminium sulphate. Furthermore, a method for producing foamed polymers by using said blowing agent in polymer formulations is disclosed. The desiccant is present in an amount of up to 3 parts by weight per 100 parts by weight of said blowing agent, whereas water is present in an amount of about 40 parts by weight.

JP 06-271775 A describes a water-absorbing resin in which a deterioration caused by bacteria or fungi is prevented. The document discloses a resin composition containing an inorganic antibacterial agent comprising silver as an antibacterial metal on zeolite or silica gel as a carrier.

WO 93/08014 A1 describes biodegradable foamed packaging materials having a closed cell structure, resiliency and compressibility. Said materials are obtained by foaming starch using carbonate or bicarbonate in combination with di-or tricarboxylic acids. The foamed starch material can be obtained by mixing starch and said foaming agent under heat and pressure, for instance in an extruder, and discharging the product to generate expansion. The addition of water to the combined dry materials prior to mixing and extruding is described as being essential in order to impart the desired flexibility, resiliency and compressibility of the foamed starch product.

Despite the disclosure in these documents, some problems remain to be addressed in a more satisfactory manner. Since many important industrial polymers have hydrophobic properties, an efficient contact of the desiccant within the polymer matrix with the moisture-containing atmosphere is impeded. Desiccants close to the surface of the desiccant-containing polymer body can immediately become active. This impedes that the desired moisture-reducing effect is attained over an extended storage period. For instance in WO 2005/061101 A, it is mentioned that the desiccant is concentrated in the vicinity of the surface of the compact polymer body.

The prior art does not refer to a polymer preparation from which a polymer having high and rapid water absorption, i.e. showing a high water absorption per time unit, can be obtained which is suitable as a packaging material that preferably also does not contain compounds which negatively affect the quality of packaged goods.

It is therefore a first object of the present invention to provide a polymer preparation from which compositions having high and rapid water absorption can be produced.

A second object of the present invention is to provide compositions having high and rapid water absorption which are useful in applications such as packaging materials, especially packaging material for food, beverages, pharmaceutical, diagnostic, electronic and other specialty products.

A third object is the provision of moulded articles comprising said compositions having high and rapid water absorption.

### Description of the Invention

Surprisingly, it was found that the first object of the invention can be achieved by providing a foamable polymer preparation comprising
(a) 19.9 to 89.9 % by weight of a polymer,
(b) 10 to 80 % by weight of a desiccant, and
(c) 0.1 to 5.0 % by weight of a foaming agent comprising a hydrogen carbonate metal salt and a component selected from the group consisting of a polycarboxylic acid containing 2 to 10 carbon atoms and at least 2 carboxyl groups, a metal salt thereof and an ester of said polycarboxylic acid in which at least one of the carboxyl groups have been esterified with an alcohol containing 1 to 6 carbon atoms; wherein the weight percentages relate to the weight of the foamable polymer preparation.

In the following, the components of such a foamable polymer preparation of the invention will be explained in more detail.

As indicated above, the foamable polymer preparation of the present invention comprises a polymer (a), a desiccant (b) and a foaming agent (c). These components will be described in the following.

### (a) Polymer

The polymer can be selected from
- polyolefins such as homopolymers and copolymers of monoolefins and diolefins, for example polypropylene (PP), polyethylene (PE) which optionally can be crosslinked such as high density polyethylene (HDPE), low density polyethylene (LDPE), linear low density polyethylene (LLDPE), branched low density polyethylene (BLDPE), and polymers of cycloolefins (COC), for example of cyclopentene or norbornene, polystyrenes including high-impact polystyrene (HIPS);
- polymers derived from α,β-unsaturated acids which are obtained by polymerizing said unsaturated bond in positions α and β relative to the acid functionality, such as polyacrylates and polymethacrylates, polyacrylonitriles, polyacrylamides and polymethyl methacrylates impact-modified with butyl acrylate polyamides;
- polymers derived from unsaturated alcohols and amines or the acyl derivatives or acetals thereof, such as polyvinyl alcohol, polyvinyl acetate, polyvinyl stearate, polyvinyl benzoate, polyvinyl maleate, polyvinyl butyral, polyallyl phthalate or polyallylmelamine, polyureas, polyimides, polyamide-imides and polybenzimidazoles;
- polyesters, i.e. polymeric reaction products of dicarboxylic acids such phthalic acid, isophthalic acid and terephthalic acid and difunctional alcohols such as ethylene glycol, propylene glycol and other diols derived from alkanes, such as polyethyleneterephthalate (PET) and polybutylene terephthalate (PBT)), poly-1,4-dimethylolcyclohexane terephthalate, polyhydroxybenzoates;
- polyamides (PA) and copolyamides derived from diamines and dicarboxylic acids and/-or from aminocarboxylic acids or the corresponding lactams, such as polyamide 4, 6, 6/6, 6/10, 6/9, 6/12, 4/6, 12/12, 11 and 12, aromatic polyamides starting from m-xylene, diamine and adipic acid; polyamides prepared from hexamethylenediamine and isophthalic and/or terephthalic acid without an elastomer as modifier, for example poly-2,4,4-trimethylhexamethylene terephthalamide or poly-m-phenylene isophthalamide;
- polycarbonates;
- polyurethanes (PUR) derived from hydroxyl-terminated polyethers and polyesters on the one hand and aliphatic or aromatic polyisocyanates on the other, and also precursors thereof;
- polyethers, i.e. polymerization products of cyclic ethers, such as polyalkylene glycols, polyethylene oxide, polypropylene oxide (PPO), polyacetales, polyethersulfones,
- halogen-containing polymers, such as polychloroprene, chlorinated rubber, chlorinated or sulphochlorinated polyethylene, copolymers of ethylene and chlorinated ethylene, epichlorohydrin homopolymers, especially polymers of halogen-containing vinyl compounds, for example polyvinyl chloride (PVC), polyvinylidene chloride, polyvinyl fluoride, polyvinylidene fluoride;
- natural polymers such as cellulose, gelatin and derivatives thereof which have been chemically modified in a polymer-homologous manner, such as cellulose acetates, cellulose propionates and cellulose butyrates, or the cellulose ethers, such as methylcellulose and also rosins and derivatives.

The polymer can also be a blend of two or more of the polymers mentioned above. The blend can be a crosslinked or non-crosslinked blend of two or more polymers. The term "crosslinked blend" as used herein encompasses statically and dynamically crosslinked blends.

Such blends can be, for example, polyvinyl chloride/ ethylene-vinyl acetate (EVA), polycarbonate (PC)/ acrylonitril-styrene-acrylester (ASA), polyvinyl chloride /acrylates, polyoxy methylene (POM)/thermoplastic polyurethane (PUR), polycarbonate (PC)/thermoplastic polyurethane (PUR), polyoxy methylene (POM)/acrylate, polyphenylene oxide (PPO)/high-impact polystyrene(HIPS), polyphenylene oxide (PPO)/polyamide (PA) 6.6 and copolymers, polyamide/high density polyethylene (HDPE), polyamide/polypropylene (PP), polyamide / polyphenylene oxide (PPO).

The polymer can also be a copolymer of two or more monomers forming repetitive units comprised in the above-mentioned polymers.

The term "copolymer," as used herein means random (statistical) copolymer, block copolymer, graft copolymer or star copolymer.

Non-limiting examples of such copolymers include styrene-ethylene-butadiene-styrene copolymers (SEBS), acrylonitrile-styrene-acrylester (ASA), ethylene-vinyl acetate copolymers (EVA), ethylene-acrylates and ethylene-acrylate based ionomers, maleic anhydride modified polymers and copolymers, polyether-polyamide copolymers, and grafted copolymers. Copolymers of halogen containing polymers thereof such as vinyl chloride-vinylidene chloride, vinyl chloride-vinyl acetate or vinylidene chloride-vinyl acetate.

Specific examples of blends and copolymers are thermoplastic elastomers, for example block copolymers such as styrenebutadiene-styrene (SBS) block copolymers, styrene-isoprene-styrene (SIS) block copolymers, styrene-ethylene-butylene-styrene (SEBS) triblock copolymers, styrene-ethylene-propylene-styrene (SEPS) triblock copolymers, block copolymer containing polyurethane segments as hard (crystalline) segments and polyether and/or polyester segments as soft (amorphous) segments, block copolymers of ethylene and propylene (EP), copolymers of propylene and higher α-olefins such as 1-butene and 1-octene, and copolymers of ethylene and α-olefins, and copolymers of an EP copolymer with an ethylene-propylene-diene (EPDM) terpolymer.

The mass-average molecular mass of the polymer (a) is not particularly limited, but is preferably in a range of from 5,000 to 1,500,000. The mass-average molecular mass is determined by gel permeation chromatography according to ISO 16014-1.

The mass-average molecular mass of the polymer is more preferably in the range of from 15,000 to 1,000,000, still more preferably from 20,000 to 500,000, and most preferably from 50,000 to 250,000.

Preferred polymers having a mass-average molecular mass in such ranges are polyolefins, polystyrenes, polyesters, polyamides, thermoplastic elastomers and copolymers and blends thereof.

Generally, the polymer (a) is present in an amount of 19.9 to 89.9 % by weight. In preferred embodiments, the polymer is present in an amount of 25-70 % by weight, more preferably 30-60 % by weight; wherein the weight percentages relate to the weight of the foamable polymer preparation as specified hereinabove.

### (b) Desiccant

The term "desiccant" as used herein relates to any material capable of absorbing or adsorbing water, or of removing water from a surrounding atmosphere by any other mechanism such as a chemical reaction.

Said desiccant can be organic or inorganic. Non-limiting examples of desiccants include silica gel, zeolites (also referred to as molecular sieves), a desiccant clay such as bentonite clay and montmorillonite, activated carbon, metal compounds, in particular oxides, chlorides, sulfates and others which have the property to absorb and/or react with water from a surrounding atmosphere. Exemplary metal salts are alkali metal salts and alkaline earth metal salts such as Na₂SO₄, MgSO₄, CaSO₄, CaCl₂, MgO, CaO and BaO.

Examples for zeolites suitable for water absorption are materials known under the name "Linde Type A" (LTA) ("Zeolith A") such as Zeolite MS 3A, Zeolite MS 4A and Zeolite MS 5. A detailed compilation of zeolites is listed in EP 0881193 B1 and in "Atlas of Zeolite Framework Types" published on behalf of the Structure Commission of the International Zeolite Association (Ch. Baerlocher, W. M. Meier, D. H. Olson, eds.), Elsevier 2001. Furthermore, suitable zeolites are listed by international three letter codes as published by the Structure Commission of the International Zeolite Association: ABW, ACO, AEI, AEL, AEN, AET, AFG, AFI, AFN, AFO, AFR, AFS, AFT, AFX, AFY, AHT, ANA, APC, APD, AST, ASV, ATN, ATO, ATS, ATT, ATV, AWO, AWW, BCT, BEA, BEC, BIK, BOG, BPH, BRE, CAN, CAS, CDO, CFI, CGF, CGS, CHA, CHI, CLO, CON, CZP, DAC, DDR, DFO, DFT, DOH, DON, EAB, EDI, EMT, EON, EPI, ERI, ESV, ETR, EUO, EZT, FAR, FAU, FER, FRA, GIS, GIU, GME, GON, GOO, HEU, IFR, IHW, ISV, ITE, ITH, ITW, IWR, IWV, IWW, JBW, KFI, LAU, LEV, LIO, LIT, LOS, LOV, LTA, LTL, LTN, MAR, MAZ, MEI, MEL, MEP, MER, MFI, MFS, MON, MOR, MOZ, MSE, MSO, MTF, MTN, MTT, MTW, MWW, NAB, NAT, NES, NON, NPO, NSI, OBW, OFF, OSI, OSO, OWE, PAR, PAU, PHI, PON, RHO, RON, RRO, RSN, RTE, RTH, RUT, RWR, RWY, SAO, SAS, SAT, SAV, SBE, SBS, SBT, SFE, SFF, SFG, SFH, SFN, SFO, SGT, SIV, SOD, SOS, SSY, STF, STI, STT, SZR, TER, THO, TON, TSC, TUN, UEI, UFI, UOZ, USI, UTL, VET, VFI, VNI, VSV, WEI, WEN, YUG, ZON.

In preferred embodiments, the desiccant is selected from the group consisting of silica gel, zeolites, alkaline earth metal oxides such as MgO, CaO, and BaO, and any combination thereof. A particularly preferable desiccant comprises an alkaline earth metal oxide, especially CaO, and a zeolite.

Generally, the desiccant (b) is present in an amount of 10 to 80 % by weight. In preferred embodiments, the desiccant can be present in an amount of from 30 to 65% by weight, more preferably 40 to 55 % by weight; wherein the percentages relate to the weight of the foamable polymer preparation as specified above.

### (c) Foaming agent

The foaming agent used in the present invention comprises a hydrogen carbonate metal salt and a component selected from the group consisting of a polycarboxylic acid containing 2 to 10 carbon atoms and at least 2 carboxyl groups, a metal salt thereof and an ester of said polycarboxylic acid in which at least one of the carboxyl groups have been esterified with an alcohol containing 1 to 6 carbon atoms.

Foaming of a polymer by said foaming agent is typically achieved by heating the foaming agent-containing preparation to a temperature resulting in the decomposition of the foaming agent which yields essentially CO₂ and H₂O as gases for polymer expansion by means of small bubbles or cells.

Said hydrogen carbonate metal salt component of the foaming agent preferably is an alkali metal or alkaline earth metal salt such as a salt of the elements Na, K, Li, Rb, Sr, Ca, Mg, Al.

In more preferred embodiments, the foaming agent is a combination of an alkali metal hydrogen carbonate and citric acid or a salt thereof such as sodium citrate.

Still more preferred is a combination of sodium hydrogen carbonate and citric acid. Such combinations are commercially available under the trade name family "Hydrocerol^{®}" from Clariant Masterbatch GmbH & Co. OHG, Ahrensburg, Germany.

Typically, the foaming agent (c) is present in an amount of 0.1 to 5.0 % by weight. In preferred embodiments, the foaming agent is present in an amount of from 0.5 to 2.0 % by weight, more preferably 1.0 to 1.5 % by weight; wherein the weight percentages relate to the weight of the foamable polymer preparation as specified above.

### (d) Additives

Optionally, the foamable polymer preparation can comprise further components which are not particularly limited. In particular, any standard additive commonly used in polymer formulations can also be incorporated into said foamable polymer preparation, unless it deteriorates foamability and/or water absorption of the composition obtained from such preparation. Examples comprise fillers, fibres, processing stabilizers, light stabilizers, anti-oxidants, lubricants, flame retardants, antistatics, pigments such as coloured pigments and/or carbon black and titanium dioxide. It is preferred that an indicator agent is incorporated which indicates saturation of the polymer foam.

As used herein, the term "saturation" means the state of a body of matter in which the amount of humidity absorbed has reached a maximum level, i.e. a thermodynamic equilibrium between the body of matter and the surrounding atmosphere with regard to humidity has been reached.

An exemplary indicator agent suitable for indicating the saturation of the polymer foam with respect to water absorption is cobalt chloride which changes its colour depending of the amount of water incorporated into the crystal lattice. CoCl₂, i.e. the anhydrous form, has a deep blue colour, whereas CoCl₂·6H₂O has a deep rose or purple colour. Thus, in the course of absorbing water the colour changes from deep blue to pink or purple.

In order to provide nucleation sites for the formation of bubbles or cells by the gaseous compound generated by the foaming agent, a nucleating agent can be incorporated.

The afore-mentioned colouring additives such as pigments can be incorporated in the foamable polymer preparation in amounts of up to 5 % by weight. Each of flame retardants, antistatics, fillers and fibres can be present in the foamable polymer preparation in amounts of up to 30 % by weight, preferably up to 10 % by weight; wherein the percentages relate to the weight of the foamable polymer preparation as specified above.

Other additives can be present in the foamable polymer preparation in amount of not more than 1.0 % by weight, preferably not more than 0.5 % by weight, most preferably not more than 0.05 % by weight; wherein the percentages relate to the weight of the foamable polymer preparation as specified above.

In a preferred embodiment, an oxygen scavenging agent can be present in the foamable polymer preparation. Thus, a material suitable as packaging material for goods that are sensitive to moisture and oxygen can be provided.

The term "oxygen scavenging agent" as used herein relates to any material capable of absorbing or adsorbing oxygen or of removing oxygen from a surrounding atmosphere by any other mechanism.

In the following, especially preferred combinations of polymer, desiccant and foaming agent are described.

In a preferred embodiment, the foaming agent is sodium hydrogen carbonate and citric acid or a salt thereof; the polymer is selected from the group consisting of homopolymers and copolymers of C₂₋₄ olefins and styrene, respectively, polyesters, polyamides, and combinations thereof; and the desiccant is selected from the group consisting of silica gel, a zeolite, alkaline earth metal oxide, especially CaO, and a combination thereof.

In more preferred embodiments, the foaming agent is a combination of sodium hydrogen carbonate and citric acid or a salt thereof; the polymer is a homopolymer or copolymer of C₂₋₄ olefins and styrene, respectively, a polyester, a polyamide; and the desiccant is a zeolite and/or alkaline earth metal oxide, most preferably zeolite and CaO.

The foamable polymer preparations described above are suitable to result in compositions comprising foamed polymers and desiccants and having high and rapid water absorption. Furthermore, the above compositions are preferably free of organic decomposition products of the foaming agent which may have a negative impact on the quality of the packaged goods.

Therefore, the second object of the present invention is achieved by providing a composition comprising a foamed polymer and a desiccant and having a water absorption of at least 0.35 g per 100 g of said composition within a time period of 24 hours at 30 °C and 60 % relative humidity and of at least 1.00 g per 100 g of said composition within a time period of 144 hours at 30 °C and 60 % relative humidity, each starting from the water-free composition comprising the foamed polymer and the desiccant.

In preferred embodiments, the water absorption is at least 0.60 g per 100 g of the composition comprising the foamed polymer and the desiccant within a time period of 24 hours at 30 °C and 60 % relative humidity and at least 1.40 g per 100 g of said composition within a time period of 144 hours at 30 °C and 60 % relative humidity, each starting from the water-free composition comprising the foamed polymer and the desiccant.

In more preferred embodiments, the water absorption determined as above is at least 1.00 g per 100 g of said composition comprising the foamed polymer and the desiccant within a time period of 24 hours and at least 2.00 g per 100 g of said composition within a time period of 144 hours, each starting from the water-free composition comprising the foamed polymer and the desiccant.

In still more preferred embodiments, the water absorption determined as above is at least 1.30 g per 100 g of said composition comprising the foamed polymer and the desiccant within a time period of 24 hours and at least 2.80 g per 100 g of said composition within a time period of 144 hours, each starting from the water-free composition comprising the foamed polymer and the desiccant.

In most preferred embodiments, the water absorption determined as above is at least 2.00 g per 100 g of said composition comprising the foamed polymer and the desiccant within a time period of 24 hours and at least 4.00 g per 100 g of said composition within a time period of 144 hours, each starting from the water-free composition of the foamed polymer and the desiccant.

The water absorption per time unit is regulated by the type of the polymer, by the amount and the type of desiccant as well as the size and the number of the cells in the foamed polymer which are determined by the amount and the type of the foaming agent.

### Method of manufacture

The foamable polymer preparations and the compositions comprising a foamed polymer and a desiccant of the present invention can be produced by the following processes.

The process for the production of the foamable polymer preparations of the present invention comprises the steps of mixing 19.9 to 89.9 % by weight of the polymer (a), 10 to 80 % by weight of the desiccant (b), and 0.1 to 5.0 % by weight of the foaming agent (c); wherein the percentages relate to the weight of the foamable polymer preparation. Mixing can be carried out by mixing said components in any mixing apparatus suitable for this purpose or by dissolving or suspending one or more of the components in a suitable solvent or dispersant, mixing the solution or dispersion thus obtained with the remaining component, if any.

Optionally, any of the above-described additives can be admixed. In preferred embodiments, an oxygen-scavenging agent is admixed in an amount of 1 to 15 % by weight relative to the weight of the foamable polymer preparation.

The composition comprising a foamed polymer and a desiccant according to the present invention can be produced by a process comprising the steps of
(i) providing a foamable polymer preparation which comprises 19.9 to 89.9 % by weight of a polymer, 10 to 80 % by weight of a desiccant, and 0.1 to 5.0 % by weight of a foaming agent comprising a hydrogen carbonate metal salt and a component selected from the group consisting of a polycarboxylic acid containing 2 to 10 carbon atoms and at least 2 carboxyl groups, a metal salt thereof and an ester of said polycarboxylic acid in which at least one of the carboxyl groups have been esterified with an alcohol containing 1 to 6 carbon atoms and, optionally, additives; wherein the percentages relate to the weight of the foamable polymer preparation;
(ii) heating said preparation to such a temperature that the polymer is plastified or molten and the foaming agent is decomposed which yields essentially CO₂ and H₂O as gases which are dispersed in the plastified/molten polymer by means of mixing.

Optionally, a step (iii) of moulding said composition comprising a foamed polymer and a desiccant can follow above step (ii).

Above-mentioned step (i) can be carried out by preparing a mixture from the individual components (a), (b), (c) and optionally further additives in a mixing apparatus prior to the application of heat in above-mentioned step (ii). As an alternative, it is also possible to provide the above individual components separately and to effect mixing simultaneously with the application of heat in order to plastify or melt the polymer.

Mixing in step (ii) can be carried out by a method appropriate in particular with respect to the viscosity of the plastified or molten composition. While generally any mixing apparatus can be used for mixing the components, the choice of the mixing apparatus to be used in the production of a specific composition will be governed by the requirements for thoroughly intermingling the components such as temperature and shear requirements for providing a uniform mixture considering the viscosity of the plastified or molten composition. Thus, the mixing apparatus can be an extruder, for instance.

If the polymer has a high mass-average molecular mass such as higher than 10,000, the polymer will usually result in a melt having relatively high viscosity. In this case, a mixing apparatus such as an extruder having a barrel which can be heated can be appropriate. If the polymer has a low mass-average molecular mass such as lower than 10,000, the polymer will usually result in a melt having relatively low viscosity. In this case, mixing could be effected in a heated container equipped with a stirring apparatus.

Optional step (iii) can be carried out by any conventionally applied method of moulding a polymer composition such as by casting and injection moulding.

According to the third aspect of the invention, articles produced from the composition comprising a foamed polymer and a desiccant are provided, especially those for packaging pharmaceutical and diagnostic products.

### Examples

### Example 1

Polyethylene-LD (type Riblene MR10, available from Polimeri Europe), molecular sieve (type Siliporite^{®} NK 10 AP, available from CECA S.A.) and fibers (superabsorber, type FiberDri 1161, available from Camelot) were mixed in a weight ratio as given for the Samples A or B below.

In the mixture for sample A, a foaming agent (Hydrocerol^{®} ESC 5211, available from Clariant Masterbatches Division) was incorporated by mixing.

Both mixtures, i.e. the mixture containing a foaming agent and the mixture containing no foaming agent, were conveyed through an extruder (barrel diameter 15 mm) into the mould of an injection moulding machine type Klöckner Ferromatik FX 25. Different zones of the barrel were heated to 150, 180, 210 and 205°C, respectively. The polymer mixtures were thus moulded into cylindrical sample bodies having a diameter of 15 mm and a height of 18 mm to obtain Sample A (containing foaming agent) and Sample B (no foaming agent) having the following composition (% by weight):

| | Sample A | Sample B (comparative) |
|---|---|---|
| PE-LD | 39 | 40 |
| Molecular sieve | 58 | 59 |
| PET-Fibers | 1 | 1 |
| Foaming agent | 2 | 0 |

The sample bodies were taken out of the mould and stored in a desiccator to allow the sample bodies to cool to room temperature. Then, of each sample, the weight of a group of five sample bodies was determined and the group of sample bodies was stored in a climate chamber (type Vötsch VC 0018) at 30 °C and 60 % relative humidity. After specific periods of storage time under these conditions, the total weight of the five sample bodies was determined for each of Sample A and Sample B. The difference between the original weight (at t = 0) and the weight at the specific point of time t > 0 was taken as the amount of water absorbed (water uptake). The data are shown in Table 1.

The results show that the foamed samples have a significantly higher and faster water uptake.

**Table 1.**

| | Sample A | | | Sample B | | | |
|---|---|---|---|---|---|---|---|
| Time [h] | sample weight [g] | water uptake | | sample weight [g] | water uptake | | ratio relative water uptake foamed/non-foamed |
| | | absolute [g] | relative | | absolute [g] | relative | |
| 0 | 2,8064 | 0,0000 | 0.0% | 5,8015 | 0,0000 | 0,0% | n/a |
| 3 | 2,8136 | 0,0072 | 0.26% | 5,8115 | 0,0100 | 0,17% | 1,49 |
| 7 | 2,8336 | 0,0272 | 0.97% | 5,8195 | 0,0180 | 0,31% | 3,12 |
| 24 | 2,8440 | 0,0376 | 1.34% | 5,8291 | 0,0276 | 0,48% | 2,82 |
| 48 | 2,8608 | 0,0544 | 1.94% | 5,8519 | 0,0504 | 0,87% | 2,23 |
| 144 | 2,8625 | 0,0561 | 2,00 % | 5,8563 | 0,0548 | 0,4% | 2,12 |

### Example 2

Using the procedure of Example 1 and the following starting materials, the samples C and D were prepared by conveying through an extruder (barrel diameter 15 mm) into the mould of an injection moulding machine type Klöckner Ferromatik FX 25. Different zones of the barrel were heated to 220, 200, 195 and 185 °C, respectively. The polymer mixtures were thus moulded into cylindrical sample bodies having a diameter of 15 mm and a height of 19 mm to obtain Sample C (containing foaming agent) and Sample D (no foaming agent) having the composition shown hereinbelow (% by weight).

PE-HD: Eraclene^{®} MR 80, available from Polimeri Europe Molecular sieve: Siliporite^{®} NK 10 AP, available from CECA S.A., France
Fibers:crosslinked polyacrylate copolymer, available from Oasis, Grimsby DN31 255, UK
Foaming agent: Hydrocerol^{®} ESC 5211, available from Clariant Masterbatches Division.

| | Sample C | Sample D |
|---|---|---|
| PE-HD | 38 | 39 |
| Molecular sieve | 56 | 60 |
| Fibers | 1 | 1 |
| Foaming agent | 5 | 0 |
| (data are given in % by weight) | | |

Testing the water absortion was carried out as described for Example 1. The results are shown in Table 2.

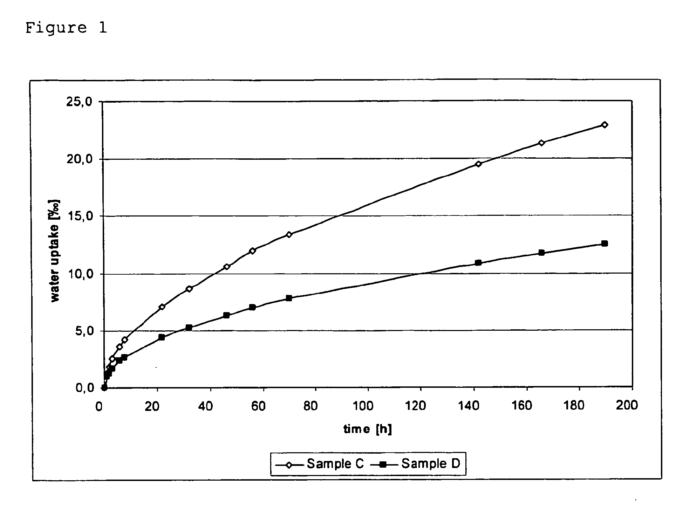

The data show that the foamed samples have a significantly higher and faster water uptake. This is also visualized in Figure 1.

**Table 2.**

| | Sample C | | | Sample D | | | |
|---|---|---|---|---|---|---|---|
| time [h] | sample weight [g] | water uptake | | sample weight [g] | water uptake | | ratio relative water uptake |
| | | absolute [g] | relative | | absolute [g] | relative | foamed/unfoamed |
| 0 | 17.4338 | 0.0000 | 0.00% | 25.7767 | 0.0000 | 0.00% | n/a |
| 1 | 17.4571 | 0.0233 | 0.13% | 25.8004 | 0.0237 | 0.09% | 1.45 |
| 2 | 17.4660 | 0.0322 | 0.18% | 25.8084 | 0.0317 | 0.12% | 1.50 |
| 3 | 17.4784 | 0.0446 | 0.26% | 25.8197 | 0.0430 | 0.17% | 1.53 |
| 6 | 17.4970 | 0.0632 | 0.36% | 25.8373 | 0.0606 | 0.24% | 1.54 |
| 8 | 17.5069 | 0.0731 | 0.42% | 25.8452 | 0.0685 | 0.27% | 1.58 |
| 22 | 17.5578 | 0.1240 | 0.71% | 25.8888 | 0.1121 | 0.43% | 1.64 |
| 32 | 17.5852 | 0.1514 | 0.87% | 25.9124 | 0.1357 | 0.53% | 1.65 |
| 46 | 17.6186 | 0.1848 | 1.06% | 25.9385 | 0.1618 | 0.63% | 1.69 |
| 56 | 17.6420 | 0.2082 | 1.19% | 25.9565 | 0.1798 | 0.70% | 1.71 |
| 70 | 17.6676 | 0.2338 | 1.34% | 25.9765 | 0.1998 | 0.78% | 1.73 |
| 142 | 17.7736 | 0.3398 | 1.95% | 26.0550 | 0.2783 | 1.08% | 1.81 |
| 166 | 17.8063 | 0.3725 | 2.14% | 26.0791 | 0.3024 | 1.17% | 1.82 |
| 190 | 17.8334 | 0.3996 | 2.29% | 26.0984 | 0.3217 | 1.25% | 1.84 |

## Claims

1. Foamable polymer preparation comprising
(a) 19.9 to 89.9 % by weight of a polymer,
(b) 10 to 80 % by weight of a desiccant,
(c) 0.1 to 5.0 % by weight of a foaming agent comprising a hydrogen carbonate metal salt and a component selected from the group consisting of a polycarboxylic acid containing 2 to 10 carbon atoms and at least 2 carboxyl groups, a metal salt thereof and an ester of said polycarboxylic acid in which at least one of the carboxyl groups have been esterified with an alcohol containing 1 to 6 carbon atoms;
wherein the weight percentages relate to the weight of the foamable polymer preparation.

2. Foamable polymer preparation according to claim 1,
wherein the foaming agent comprises an alkali metal hydrogen carbonate and citric acid or a salt thereof.

3. Foamable polymer preparation according to claim 1 or 2, wherein the desiccant comprises zeolite and an alkaline earth metal oxide.

4. Foamable polymer preparation according to any of claims 1 to 3, wherein the polymer has a mass-average molecular mass of from 5,000 to 1,500,000.

5. Composition comprising a foamed polymer and a desiccant and having a water absorption of at least 0.35 g per 100 g of said composition within a time period of 24 hours at 30 °C and 60 % relative humidity and of at least 1.00 g per 100 g of said composition within a time period of 144 hours at 30 °C and 60 % relative humidity, each starting from the water-free composition comprising the foamed polymer and the desiccant.

6. Composition according to claim 5, wherein the water absorption is at least 2.00 g per 100 g of the composition within a time period of 24 hours at 30 °C and 60 % relative humidity and at least 4.00 g per 100 g of the composition within a time period of 144 hours at 30 °C and 60 % relative humidity, each starting from the water-free composition comprising the foamed polymer and the desiccant.

7. Composition according to claim 5 or 6, which is free of organic decomposition products of the foaming agent.

8. Process for preparing a composition comprising a foamed polymer and a desiccant as defined in any of the claims 5 to 7, comprising the steps of
(i) providing a foamable polymer preparation which comprises 19.9 to 89.9 % by weight of a polymer, 10 to 80 % by weight of a desiccant, and 0.1 to 5.0 % by weight of a foaming agent comprising a hydrogen carbonate metal salt and a component selected from the group consisting of a polycarboxylic acid containing 2 to 10 carbon atoms and at least 2 carboxyl groups, a metal salt thereof and an ester of said polycarboxylic acid in which at least one of the carboxyl groups have been esterified with an alcohol containing 1 to 6 carbon atoms and, optionally, additives; wherein the weight percentages relate to the weight of the foamable polymer preparation;
(ii) heating said preparation to such a temperature that the polymer is plastified or molten and that the foaming agent is decomposed which yields essentially CO₂ and H₂O as gases which are dispersed in the plastified/molten polymer by means of mixing.

9. Article prepared from the composition comprising a foamed polymer and a desiccant as defined in any of the claims 5 to 7.

10. Article according to claim 9 useful for packaging of pharmaceutical and diagnostic products.

## Patentansprüche

1. Schäumbare Polymerzusammensetzung, umfassend
(a) 19,9 bis 89,9 Gew.% eines Polymers,
(b) 10 bis 80 Gew.% eines Trockenmittels,
(c) 0,1 bis 5,0 Gew.% eines Schäumungsmittels, umfassend ein Hydrogencarbonatmetallsalz und eine Komponente, die ausgewählt ist aus der Gruppe bestehend aus einer Polycarbonsäure mit 2 bis 10 Kohlenstoffatomen und wenigstens 2 Carboxylgruppen, einem Metallsalz davon und einem Ester der Polycarbonsäure, in dem wenigstens eine der Carboxylgruppen mit einem Alkohol mit 1 bis 6 Kohlenstoffatomen verestert ist;
wobei sich die Gewichtsprozentangaben auf das Gewicht der schäumbaren Polymerzubereitung beziehen.

2. Schäumbare Polymerzusammensetzung gemäß Anspruch 1, worin das Schäumungsmittel ein Alkalimetallhydrogencarbonat und Zitronensäure oder ein Salz davon umfasst.

3. Schäumbare Polymerzusammensetzung gemäß Anspruch 1 oder 2, worin das Trockenmittel Zeolit und ein Erdalkalimetalloxid umfasst.

4. Schäumbare Polymerzusammensetzung gemäß einem der Ansprüche 1 bis 3, worin das Polymer ein gewichtsgemitteltes Molekulargewicht von 5.000 bis 1.500.000 aufweist.

5. Zusammensetzung, umfassend ein geschäumtes Polymer und ein Trockenmittel, die eine Wasserabsorption von wenigstens 0,35 g pro 100 g der Zusammensetzung innerhalb einer Zeitspanne von 24 Stunden bei 30°C und 60 % relativer Luftfeuchte und von wenigstens 1,00 g pro 100 g der Zusammensetzung innerhalb einer Zeitspanne von 144 Stunden bei 30°C und 60% relativer Luftfeuchte, jeweils ausgehend von der wasserfreien Zusammensetzung, umfassend das geschäumte Polymer und das Trockenmittel, aufweist.

6. Zusammensetzung gemäß Anspruch 5, worin die Wasserabsorption wenigstens 2,00 g pro 100 g der Zusammensetzung innerhalb einer Zeitspanne von 24 Stunden bei 30°C und 60 % relativer Luftfeuchte und wenigstens 4,00 g pro 100 g der Zusammensetzung innerhalb einer Zeitspanne von 144 Stunden bei 30°C und 60% relativer Luftfeuchte, jeweils ausgehend von der wasserfreien Zusammensetzung, umfassend das geschäumte Polymer und das Trockenmittel, beträgt.

7. Zusammensetzung gemäß Anspruch 5 oder 6, die frei von organischen Zersetzungsprodukten des Schäumungsmittels ist.

8. Verfahren zum Herstellen einer Zusammensetzung, umfassend ein geschäumtes Polymer und ein Trockenmittel wie in einem der Ansprüche 5 bis 7 definiert, umfassend die Schritte
(i) Bereitstellen einer schäumbaren Polymerzubereitung, die 19,9 bis 89,9 Gew.% eines Polymers, 10 bis 80 Gew.% eines Trockenmittels und 0,1 bis 5,0 Gew.% eines Schäumungsmittels, umfassend ein Hydrogencarbonatmetallsalz und eine Komponente, ausgewählt ist aus der Gruppe bestehend aus einer Polycarbonsäure mit 2 bis 10 Kohlenstoffatomen und wenigstens 2 Carboxylgruppen, einem Metallsalz davon und einem Ester der Polycarbonsäure, in dem wenigstens eine der Carboxylgruppen mit einem Alkohol mit 1 bis 6 Kohlenstoffatomen verestert ist und gegebenenfalls Additive umfasst;
wobei sich die Gewichtsprozentangaben auf das Gewicht der schäumbaren Polymerzubereitung beziehen;
(ii) Erwärmen der Zubereitung auf eine solche Temperatur, dass das Polymer weich wird oder schmilzt und dass das Schäumungsmittel zersetzt wird, was im wesentlichen CO₂ und H₂O als Gase ergibt, die durch Mischen in dem erweichten/geschmolzenen Polymer dispergiert werden.

9. Gegenstand, hergestellt aus der Zusammensetzung, umfassend ein geschäumtes Polymer und ein Trockenmittel wie in einem der Ansprüche 5 bis 7 definiert.

10. Gegenstand gemäß Anspruch 9, der zum Verpacken von pharmazeutischen und diagnostischen Produkten geeignet ist.

## Revendications

1. Préparation de polymère moussable comprenant
- (a) 19,9 à 89,9 % en poids d'un polymère,
- (b) 10 à 80 % en poids d'un dessiccant,
- (c) 0,1 à 5,0 % en poids d'un agent moussant comprenant un sel de métal d'hydrogénocarbonate et un composant choisi dans le groupe consistant en un acide polycarboxylique contenant 2 à 10 atomes de carbone et au moins 2 groupes carboxyle, un sel de métal de celui-ci et un ester dudit acide polycarboxylique dans lequel au moins l'un des groupes carboxyle a été estérifié avec un alcool contenant 1 à 6 atomes de carbone ;
dans laquelle les pourcentages en poids sont relatifs au poids de la préparation de polymère moussable.

2. Préparation de polymère moussable selon la revendication 1, dans laquelle l'agent moussant comprend un hydrogénocarbonate de métal alcalin et de l'acide citrique ou un sel de celui-ci.

3. Préparation de polymère moussable selon la revendication 1 ou 2, dans laquelle le dessiccant comprend de la zéolite et un oxyde de métal alcalino-terreux.

4. Préparation de polymère moussable selon l'une quelconque des revendications 1 à 3, dans laquelle le polymère a une masse moléculaire moyenne en masse de 5 000 à 1 500 000.

5. Composition comprenant un polymère moussé et un dessiccant ayant une absorption d'eau d'au moins 0,35 g pour 100 g de ladite composition dans une période de 24 heures à 30 °C et 60 % d'humidité relative et d'au moins 1,00 g pour 100 g de ladite composition dans une période de 144 heures à 30 °C et 60 % d'humidité relative, chacune à partir de la composition dépourvue d'eau comprenant le polymère moussé et le dessiccant.

6. Composition selon la revendication 5, dans laquelle l'absorption d'eau est d'au moins 2,00 g pour 100 g de la composition dans une période de 24 heures à 30 °C et 60 % d'humidité relative et d'au moins 4,00 g pour 100 g de la composition dans une période de 144 heures à 30 °C et 60 % d'humidité relative, chacune à partir de la composition dépourvue d'eau comprenant le polymère moussé et le dessiccant.

7. Composition selon la revendication 5 ou 6, qui est dépourvue de produits de décomposition organiques de l'agent moussant.

8. Procédé de préparation d'une composition comprenant un polymère moussé et un dessiccant telle que définie dans l'une quelconque des revendications 5 à 7, comprenant les étapes suivantes
- (i) la fourniture d'une préparation de polymère moussable qui comprend 19,9 à 89,9 % en poids d'un polymère, 10 à 80 % en poids d'un dessiccant et 0,1 à 5,0 % en poids d'un agent moussant comprenant un sel de métal d'hydrogénocarbonate et un composant choisi dans le groupe consistant en un acide polycarboxylique contenant 2 à 10 atomes de carbone et au moins 2 groupes carboxyle, un sel de métal de celui-ci et un ester dudit acide polycarboxylique dans lequel au moins l'un des groupes carboxyle a été estérifié avec un alcool contenant 1 à 6 atomes de carbone et, facultativement, des additifs ;
- dans lequel les pourcentages en poids sont relatifs au poids de la préparation de polymère moussable ;
- (ii) le chauffage de ladite préparation à une température telle que le polymère est plastifié ou fondu et que l'agent moussant est décomposé, ce qui conduit essentiellement à du CO₂ et du H₂O sous forme de gaz qui sont dispersés dans le polymère plastifié/fondu au moyen d'un mélange.

9. Article préparé à partir de la composition comprenant un polymère moussé et un dessiccatif telle que définie dans l'une quelconque des revendications 5 à 7.

10. Article selon la revendication 9, utile pour emballer des produits pharmaceutiques et diagnostiques.
